Europäisches Patentamt

European Patent Office

Office européen des brevets

(19)

(11) Numéro de publication : **0 133 100**
**B1**

(12) **FASCICULE DE BREVET EUROPÉEN**

(45) Date de publication du fascicule du brevet :
16.06.87

(51) Int. Cl.⁴ : **H 04 M 19/04**

(21) Numéro de dépôt : **84401489.4**

(22) Date de dépôt : **13.07.84**

(54) Circuit injecteur de sonnerie pour poste téléphonique d'abonné.

(30) Priorité : **22.07.83 FR 8312174**

(43) Date de publication de la demande :
**13.02.85 Bulletin 85/07**

(45) Mention de la délivrance du brevet :
**16.06.87 Bulletin 87/25**

(84) Etats contractants désignés :
**DE IT**

(56) Documents cités :
**EP-A- 0 051 446**
**DE-A- 2 133 148**
**US-A- 4 239 935**
**PATENTS ABSTRACTS OF JAPAN, vol. 7, no. 40, 17 février 1983, page 11 E 159**

(73) Titulaire : **THOMSON-CSF TELEPHONE**
**146, Boulevard de Valmy**
**F-92707 Colombes (FR)**

(72) Inventeur : **Bernard, Gilles**
**THOMSON-CSF SCPI 173, bld Haussmann**
**F-75379 Paris Cedex 08 (FR)**
Inventeur : **Roux, Raphael**
**THOMSON-CSF SCPI 173, bld Haussmann**
**F-75379 Paris Cedex 08 (FR)**
Inventeur : **Paulet, José**
**THOMSON-CSF SCPI 173, bld Haussmann**
**F-75379 Paris Cedex 08 (FR)**

(74) Mandataire : **Weinmiller, Jürgen et al**
**Lennéstrasse 9 Postfach 24**
**D-8133 Feldafing (DE)**

## Description

La présente invention se rapporte à un circuit injecteur de sonnerie pour poste téléphonique d'abonné.

Les circuits connus d'injection de signaux de sonnerie comportent soit des relais, qui sont encombrants, soit des circuits électroniques, qui sont difficiles à mettre en œuvre.

La présente invention a pour objet un circuit injecteur de sonnerie pour poste téléphonique d'abonné, permettant d'injecter des signaux de sonnerie de toutes formes d'ondes d'amplitude même très faible, ce circuit pouvant être réalisé selon la technique de l'hybridation et consommant le moins de courant possible, en particulier en état d'attente.

Le circuit injecteur de sonnerie conforme à l'invention comporte un élément commutateur à commande par signaux logiques suivi d'un circuit déphaseur à 180° dont chaque sortie est reliée à un circuit amplificateur présentant une impédance de sortie très élevée au repos, l'élément commutateur reliant la source de signaux de sonnerie au circuit déphaseur, et les sorties des circuits amplificateurs étant reliées chacune, par l'intermédiaire d'un condensateur d'isolation galvanique, à un fil de ligne.

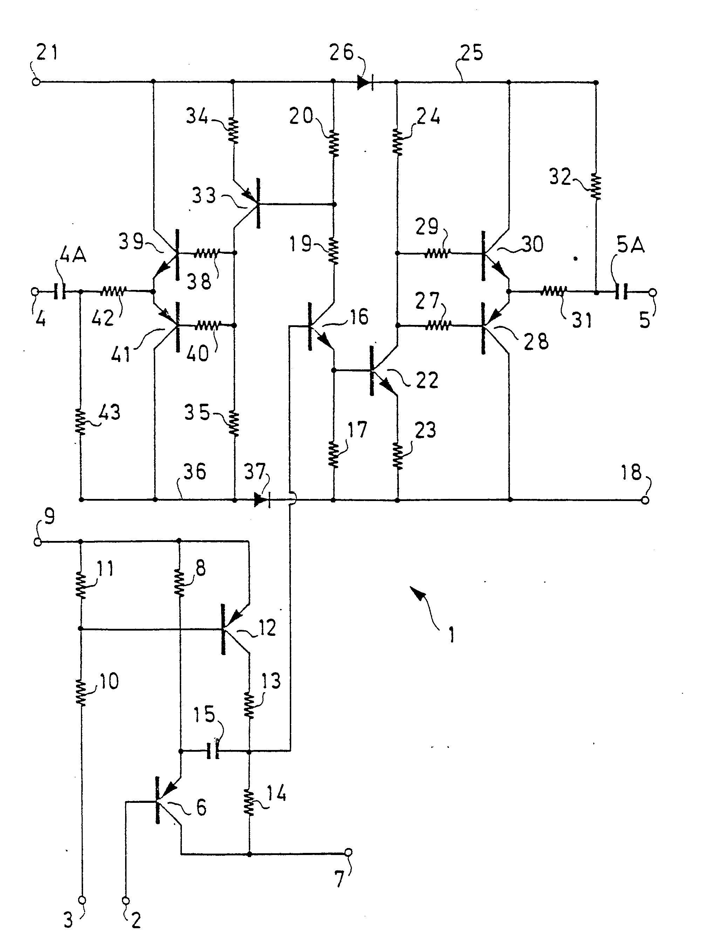

La présente invention sera mieux comprise à la lecture de la description détaillée d'un mode de réalisation pris comme exemple non limitatif et illustré par le dessin annexe dont la figure unique est un schéma électrique de ce mode de réalisation.

Le circuit injecteur de sonnerie 1 dont le schéma électrique d'un mode de réalisation préféré est représenté sur la figure unique du dessin est destiné à équiper un poste électronique d'abonné, mais il est bien entendu que ce circuit peut également équiper tout dispositif dans lequel on doit injecter un signal de forme quelconque disponible par rapport à un potentiel de référence, sur une ligne symétrique à potentiels flottants.

Le circuit injecteur de sonnerie 1 comporte une entrée 2 de signal de sonnerie incident, une entrée 3 de signal de commande logique et deux sorties symétriques 4, 5 sur lesquelles doivent apparaître des signaux identiques entre eux, mais en opposition de phase, et de mêmes fréquence et forme d'onde que le signal de sonnerie incident, lorsque le signal de commande logique est actif.

L'entrée 2 est reliée à la base d'un transistor PNP 6 transformateur d'impédance dont le collecteur est relié à une borne 7, elle-même reliée à un potentiel négatif de polarisation, qui a, dans le cas présent, une valeur de 5 V. L'émetteur du transistor 6 est relié par une résistance 8 à une borne 9, elle-même reliée à un potentiel positif de polarisation, qui a dans le cas présent une valeur de + 5 V. Dans le cas présent, le circuit (non représenté) branché en amont de la borne 2 comporte un circuit de sortie permettant la polarisation de la base du transistor 6 à un potentiel pratiquement nul. Si l'on ne dispose pas de tels circuits, il suffit de relier la base du transistor 6 aux bornes 7 et 9 par des résistances d'égales valeurs suffisamment élevées pour ne pas perturber son impédance d'entrée.

La borne 3 est reliée par deux résistances série 10, 11 respectivement, à la borne 9. Le point commun des résistances 10, 11 est relié à la base d'un transistor PNP 12 de commutation dont l'émetteur est directement relié à la borne 9 et dont le collecteur est relié par deux résistances série 13, 14 respectivement, à la borne 7. Le point commun des résistances 13, 14 est relié, d'une part, par un condensateur 15 à l'émetteur du transistor 6, et d'autre part à la base d'un transistor NPN 16 monté en déphaseur.

L'émetteur du transistor 16 est relié par une résistance 17 à une borne 18, elle-même reliée au potentiel 0 Volt. Le collecteur du transistor 16 est relié par deux résistances série 19, 20 respectivement, à une borne 21 elle-même reliée à un potentiel positif élevé, par exemple de + 100 V.

L'émetteur du transistor 16 est également relié à la base d'un transistor NPN 22 d'attaque. L'émetteur du transistor 22 est relié à la borne 18 par une résistance 23. Le collecteur du transistor 22 est relié par une résistance 24 à une ligne de potentiel 25 reliée elle-même à la cathode d'une diode 26 dont l'anode est reliée à la borne 21. Le collecteur du transistor 22 est également relié par une résistance 27 à la base d'un transistor PNP 28, et par une résistance 29 à la base d'un transistor NPN 30. Les émetteurs des transistors 28 et 30 sont reliés ensemble et par une résistance 31 en série avec un condensateur 5A à la borne 5. Le collecteur du transistor 28 est relié à la borne 18, et celui du transistor 30 est relié à la ligne 25. La ligne 25 est reliée par une résistance 32 en série avec ledit condensateur 5A à la borne 5. Les transistors 28 et 30, branchés de la façon décrite ci-dessus, forment, au repos, c'est-à-dire lorsqu'un signal de blocage est appliqué sur la borne 3, un circuit à impédance de sortie très élevée (par rapport à celle de la ligne branchée sur les bornes 5 et 4), pour les raisons expliquées ci-dessous.

Le point commun des résistances 19 et 20 est relié à la base d'un transistor PNP d'attaque 33 dont l'émetteur est relié par une résistance 34 à la borne 21. Le collecteur du transistor 33 est relié par une résistance 35 à une ligne de potentiel 36, elle-même reliée à l'anode d'une diode 37 dont la cathode est reliée à la borne 18.

Le collecteur du transistor 33 est également relié par une résistance 38 à la base d'un transistor NPN 39, et par une résistance 40 à la base d'un transistor PNP 41. Les émetteurs des transistors 40 et 41 sont reliés ensemble, et par une résistance 42 en série avec un condensateur 4A à la borne 4. La ligne 36 est reliée par une résistance 43 en série avec ledit condensateur 4A à la borne 4. Les transistors 39 et 41 reliés de la façon décrite ci-dessus, forment également un circuit amplificateur présentant au repos une impédance de sortie très élevée.

Les éléments 22 à 32 sont choisis de même valeur que les éléments 33 à 43 respectivement afin d'obtenir une bonne symétrie des signaux recueillis sur les bornes 5 et 4.

Le transistor d'entrée 6, recevant le signal de sonnerie (référencé par rapport au potentiel zéro), est un simple adaptateur d'impédance, car il est en montage collecteur commun.

Le transistor 12 est bloqué lorsque l'on applique un niveau logique « 1», (d'environ + 5 V) sur la borne 3. Le point commun des résistances 13 et 14 est alors au potentiel de la borne 7, C'est-à-dire à − 5 V. Le transistor 16 est donc alors bloqué.

Lorsque l'on applique un niveau logique « 0 », c'est-à-dire le potentiel zéro, sur la borne 3, le transistor 12 devient passant, et un courant circule dans les résistances 13 et 14.

La valeur de la résistance 13 étant choisie inférieure à celle de la résistance 14, par exemple un tiers de la valeur de cette dernière, le point commun de ces deux résistances est alors à un potentiel positif rendant passant le transistor 16. Par conséquent, un signal appliqué sur la borne 2 peut être alors transmis par le transistor 16.

Cas d'un signal de blocage appliqué sur la borne 3 (état logique « 1 » ou borne non reliée) :

Lorsque les transistors 12 et 16 sont bloqués, la base du transistor 22 est au potentiel zéro, et il est donc bloqué, quel que soit le potentiel sur son collecteur. Que la diode 26 soit bloquée ou non, du fait que le transistor 22 est bloqué le potentiel sur les bases des transistors 28 et 30 est égal au potentiel sur la cathode de la diode 26. Que le transistor 28 soit bloqué ou non, le potentiel sur son émetteur sera alors égal ou inférieur au potentiel sur la cathode de la diode 26. Par conséquent, le potentiel de la base du transistor 28 est alors plus positif ou égal au potentiel sur son émetteur, et ce transistor est donc bloqué. Ceci entraîne que le potentiel sur l'émetteur du transistor 30 est égal au potentiel sur sa base, et ce transistor est donc bloqué. Par conséquent, l'impédance du circuit 1 vue de la borne 5 est pratiquement égale à celle de la résistance 32, qui peut être choisie très élevée, par exemple de 100 kilohms.

Par un raisonnement analogue, on peut démontrer qu'il en est de même pour le circuit comprenant les transistors 33, 39 et 41, et que l'impédance du circuit vue de la borne 4 est pratiquement égale à celle de la résistance 43, qui est choisie égale à la résistance 32.

Cas d'un signal de validation (0 volt) appliqué sur la borne 3 :

1) en l'absence de signal sur la borne 2.

La base du transistor 12 se trouve alors portée à un potentiel déterminé par le rapport des résistances 10 et 11 formant pont diviseur entre la borne 9, portée à un potentiel de + 5 V, et le potentiel 0 V de la borne 3. Dans un mode de réalisation, on choisit la valeur de la résistance 10 égale à environ quatre fois celle de la résistance 11. Le potentiel de la base du transistor 12 est alors de + 4 V, et le transistor 12 est passant. Un courant passe alors dans les résistances 13 et 14. Dans un mode de réalisation, on choisit la valeur de la résistance 14 égale à environ trois fois celle de la résistance 13. Le potentiel de leur point commun est alors d'environ + 2,5 V. Le transistor 16 est alors passant et son point de repos est defini par la valeur de ses résistances de charge 19 et 20 et par sa résistance d'émetteur 17. Il en est de même pour les transistors 22 et 33, dont la polarisation est déterminée en particulier par les tensions aux bornes des résistances 17 et 20 respectivement.

La résistance de charge et celle d'émetteur du transistor 22 sont déterminées pour que le potentiel sur son collecteur soit sensiblement égal à la moitié du potentiel sur la ligne 25 (potentiel par rapport au potentiel de référence 0 V sur la borne 18). Le transistor 28 est alors légèrement passant, et le transistor 30 juste bloqué, le potentiel sur leurs émetteurs étant légèrement supérieur (d'environ 0,7 V) au potentiel sur leurs bases.

Le même raisonnement s'applique au circuit branché en aval du point commun des résistances 19 et 20, et au repos le transistor 39 est légèrement passant, alors que le transistor 41 est juste bloqué.

2) Lorsqu'un signal est appliqué sur la borne 2 :

Ce signal peut avoir une forme d'onde quelconque, et, bien entendu, son amplitude et/ou sa composante continue éventuelle doivent être telles qu'elles ne provoquent ni le blocage ni la saturation du transistor 6. Ce signal, après passage par les transistors 6 et 16, donne deux signaux de même forme, mais en opposition de phase entre eux, aux bornes des résistances 17 et 20. Dans l'amplificateur comportant les éléments 22 à 32, les alternances positives du signal provenant de la résistance 17 sont amplifiées par le transistor 30, et les alternances négatives par le transistor 28. On obtient donc sur la borne 5 le signal incident amplifié, et de même phase. Les éléments 34 à 43 étant identiques à ceux référencés respectivement 23 à 27, 30, 29, 28, 31 et 32, et les transistors 33 et 22 étant complémentaires, on obtient sur la borne 4 le signal incident amplifié, mais en opposition de phase.

Les diodes 26 et 37 permettent de maintenir l'impédance du circuit vue des bornes 4 et 5 à une valeur élevée lorsqu'un signal de blocage est appliqué sur la borne 3 et que des signaux extérieurs arrivent aux bornes 4 et/ou 5. En effet, dans ce cas, de tels signaux extérieurs peuvent déplacer le potentiel des émetteurs des transistors 28-30 et 39-41. Le transistor 30 peut alors devenir passant pour les alternances négatives des signaux extérieurs, et le transistor 28 peut devenir passant pour les alternances positives de ces signaux, si l'amplitude de ces alternances dépasse quelques volts. Il en est de même pour les transistors 39 et 41. La résistance inverse des diodes 26 et 37, qui est très élevée, empêche l'impédance de sortie du circuit 1 vue des bornes 4 et 5 de descendre à une valeur du même ordre de grandeur ou plus faible que celle des lignes branchées en aval des bornes 4 et 5.

La liaison aux lignes par les condensateurs 4A et 5A permet de simplifier le circuit d'arrêt d'appel grâce à la séparation de potentiels assurée par ces condensateurs. En outre, ces condensateurs permettent de n'avoir, outre les tensions de polarisation à faible débit de + 5 V et — 5 V, qu'une seule tension d'alimentation à + 100 volts environ. En régime d'attente, qui occupe généralement la quasi-totalité du temps d'exploitation d'un poste téléphonique, tous les transistors étant bloqués, le circuit d'injection de l'invention ne consomme pas de courant la plupart du temps.

Les signaux que l'on applique sur la borne 2 peuvent avoir une amplitude faible, de l'ordre de 1 volt. Ces signaux peuvent aussi bien être des signaux de sonnerie que des données quelconques, ou des signaux de parole, le circuit injecteur étant alors utilisable en interphone.

Le circuit injecteur de l'invention étant de faible encombrement (réalisable en circuit hybride) et de bas prix de revient, peut être disposé dans un poste d'abonné. Ainsi, en cas de panne d'un circuit injecteur, seul le poste téléphonique de l'abonné qui le contient ne peut produire de sonnerie.

Dans un mode de réalisation préféré de l'invention, les transistors 6, 12, 16, 22, 33, 30 (et 39), 28 (et 41) sont respectivement :
2N907 A, MPSA 92, MPSA 42, MPSA 42, MPSA 92, MJE 340, MJE 350.

Les condensateurs ont pour capacité un microfarad. Les résistances 8, 10, 11, 13, 14 ont pour valeurs respectives (en kilohms) : 13 — 3,9 — 1 — 7,6 — 20, la tolérance sur le rapport de 0,384 entre les valeurs des résistances 14 et 13 étant meilleure que 1 %. Les valeurs des résistances 17, 19, 20, 23, (et 34), 24 (et 35), 27 (et 38), 29 (et 40), 31 (et 42), 32 (et 43) sont respectivement, en kilohms : 0,787 — 13 — 0,787 — 0,475 — 20 — 1 — 1 — 0,22 — 100, les valeurs des résistances 17 et 20 ainsi que 32 et 42 étant apairées à mieux que 1 %. Les tolérances sur les valeurs des résistances 23, 24, 34, 35 sont à 1 %, celles sur les valeurs des résistances 27, 29, 31, 38, 40, 42 sont à 2 %, et les autres à 5 %.

## Revendications

1. Circuit injecteur de sonnerie (1) pour poste téléphonique d'abonné, caractérisé par le fait qu'il comporte un élément commutateur (12) à commande par signaux logiques (3) suivi d'un circuit déphaseur à 180° (16) dont chaque sortie est reliée à un circuit amplificateur (22 à 32 et 33 à 43) présentant une impédance de sortie très élevée au repos, l'élément commutateur reliant la source de signaux de sonnerie (2) au circuit déphaseur, et les sorties des circuits amplificateurs étant reliées chacune, par l'intermédiaire d'un condensateur d'isolation galvanique (4A, 5A) à un fil de ligne (4, 5).

2. Circuit injecteur de sonnerie selon la revendication 1, caractérisé par le fait que la source de signaux de sonnerie est reliée au circuit déphaseur par l'intermédiaire d'un circuit adaptateur d'impédance (6).

3. Circuit injecteur de sonnerie selon l'une quelconque des revendications 1 ou 2, caractérisé par le fait que chaque circuit amplificateur comporte, entre une ligne d'alimentation (25, 36) reliée à une borne d'une source d'alimentation (21, 18), et l'autre borne de la source d'alimentation, un circuit série constitué par les trajets collecteur-émetteur d'un transistor NPN (30, 39) et d'un transistor PNP (28, 41) ces transistors étant polarisés à l'état bloqué au repos.

4. Circuit injecteur de sonnerie selon la revendication 3, caractérisé par le fait que chaque ligne d'alimentation précitée (25, 36) est reliée à la borne correspondante de la source d'alimentation par une diode (26, 37).

## Claims

1. A ringing signal injection circuit (1) for a subscriber telephone set, characterized in that it includes a switching element (12) with control by logic signals (3) followed by a 180° phase shifting circuit (16) each output of which is connected to an amplifying circuit (22 to 32 and 33 to 43) having a very high output impedance at rest, the switching element connecting the ringing signal source (2) to the phase-shifting circuit, and the outputs of the amplifying circuits being each connected, through a galvanic insulating capacitor (4A, 5A) to a line wire (4, 5).

2. A ringing signal injection circuit as claimed in claim 1, characterized in that said ringing signal source is connected to the phase shifting circuit through an impedance matching circuit (6).

3. A ringing signal injection circuit as claimed in any one of claims 1 or 2, characterized in that each amplifying circuit comprises, between a supply line (25, 36) connected to a terminal of a supply source (21, 18) and the other terminal of the supply source, a series circuit formed by the collector-emitter paths of a NPN transistor (30, 39) and of a PNP transistor (28, 41), these transistors being biased to the disabled state at rest.

4. A ringing signal injection circuit as claimed in claim 3, characterized in that each said supply line (25, 36) is connected to the corresponding terminal of the supply source through a diode (26, 37).

## Patentansprüche

1. Schaltungsanordnung (1) zur Injektion des Klingelsignals für ein Teilnehmer-Fernsprechgerät, dadurch gekennzeichnet, daß sie ein von logischen Signalen (3) gesteuertes Schaltelement (12) gefolgt von einem Phasendrehkreis (16) um 180° aufweist, dessen beide Ausgänge je an einen Verstärkerkreis (22 bis 32 und 33 bis 43) angeschlossen sind, wobei diese Verstärkerkreise im Ruhezustand eine sehr hohe Ausgangsimpedanz besitzen und das Schaltelement die Klingelsignalquelle (2) an den Phasendrehkreis anschließt, und daß die Ausgänge der Verstärkerkreise je über einen Kondensator (4A, 5A) zur galvanischen Trennung an einen Leitungsdraht (4, 5) angeschlossen sind.

2. Schaltungsanordnung zur Injektion des Klingelsignals nach Anspruch 1, dadurch gekennzeichnet, daß die Klingelsignalquelle an den Phasendrehkreis über einen Impedanzanpassungskreis (6) angeschlossen ist.

3. Schaltungsanordnung zur Injektion des Klingelsignals nach einem beliebigen der Ansprüche 1 oder 2, dadurch gekennzeichnet, daß jeder Verstärkerkreis zwischen einer Versorgungsleitung (25, 36), die an eine Stromquellenklemme (21, 18) angeschlossen ist, und der anderen Stromquellenklemme einen Serienkreis enthält, der aus den Kollektor-Emitter Strecken eines NPN-Transistors (30, 39) und eines PNP-Transistors (28, 41) besteht, wobei diese Transistoren im Ruhezustand in Sperrichtung vorgespannt sind.

4. Schaltungsanordnung zur Injektion des Klingelsignals nach Anspruch 3, dadurch gekennzeichnet, daß jede der genannten Versorgungsleitungen (25, 36) an die entsprechende Klemme der Stromquelle über eine Diode (26, 37) angeschlossen ist.